# EUROPEAN PATENT APPLICATION

(11) **EP 4 726 878 A1**
(43) Date of publication of application: **15.04.2026**
(21) Application number: 24819244.5
(22) Date of filing: 30.05.2024
(51) Int. Cl.: H01M 50/204, H01M 50/367, H01M 50/569

(54) **BATTERY PACK**

(30) Priority: 07.06.2023 JP 2023094020
(71) Applicant: AESC Japan Ltd., Yokohama-shi, Kanagawa 220-0012 (JP)
(72) Inventor: MATSUURA, Moritaka, Zama-shi, Kanagawa 252-0012 (JP); TAKAGI, Gentaro, Zama-shi, Kanagawa 252-0012 (JP); NARUSE, Mikio, Zama-shi, Kanagawa 252-0012 (JP); YOSHIOKA, Shinichi, Zama-shi, Kanagawa 252-0012 (JP)
(74) Representative: Mathys & Squire
(86) International application number: PCT/JP2024/019836
(87) International publication number: WO 2024/253013

(57) **Abstract**

A battery pack (10) includes a battery module (100), a module housing body (300) that accommodates the battery module (100), a gas discharge portion (400) to discharge gas discharged from the battery module (100) out of the module housing body (300), and an upper heat-resistant sheet (610) and a lower heat-resistant sheet (620) that are at least partially disposed around a communication space (350) that communicates with the battery module (100) and the gas discharge portion (400) inside the module housing body (300).

## Description

### TECHNICAL FIELD

The present invention relates to a battery pack.

### BACKGROUND ART

In recent years, various battery packs have been developed. The battery pack includes a plurality of battery modules and a housing body that accommodates the plurality of battery modules. Each battery module includes a plurality of battery cells that are electrically connected to each other in a combination of series and parallel.

Patent Document 1 discloses a battery tray that accommodates a single battery. The battery tray includes a bottom plate, a side beam, and a plurality of partition plates. The gas generated from the single battery is discharged from an explosion-proof valve of the battery pack provided in the side beam through an intake port provided in each partition plate and a gas passage provided in each partition plate and the side beam.

Patent Document 2 discloses a battery device. The battery device includes a battery and a housing body that accommodates the battery. The housing body includes a housing portion that accommodates the battery, a flow-in portion through which air flows in, and a flow-out portion through which gas that has flowed in from the flow-in portion and has passed through the housing portion flows out.

Patent Document 3 discloses a battery pack. The battery pack includes a battery stack, and a lower case and an upper case that accommodate the battery stack. A discharge valve is provided on the upper surface of each cell included in the battery stack. A plate member is provided on the lower surface of the upper case. The plate member and the discharge valve overlap each other with the upper case covering the upper surface of each cell.

### RELATED DOCUMENT

### PATENT DOCUMENT

Patent Document 1: PCT Japanese Translation Patent Publication No. 2022-515674
Patent Document 2: Japanese Unexamined Patent Publication No. 2020-053223
Patent Document 3: Japanese Unexamined Patent Publication No. 2019-197622

### SUMMARY OF THE INVENTION

### TECHNICAL PROBLEM

The gas discharged from the battery module is discharged from a gas discharge portion such as a pressure relief device (PRD) provided in the housing body. The gas discharged from the battery module may be relatively high in temperature. When the high-temperature gas is discharged from the battery module, the gas may cause the temperature rise around a space that communicates with the battery module and the gas discharge portion in the housing body.

An example of the object of the present invention is to suppress temperature rise of the battery pack due to the gas discharged from the battery module. Other objects of the present invention will become apparent from the description of the present specification.

### SOLUTION TO PROBLEM

An aspect of the present invention is as follows.
1. A battery pack including:
   a battery module;
   a housing body that accommodates the battery module;
   a gas discharge portion to discharge gas discharged from the battery module out of the housing body; and
   a heat-resistant member that is at least partially disposed around a space that communicates with the battery module and the gas discharge portion inside the housing body.
2. The battery pack according to 1., in which the heat-resistant member covers at least a part of the battery module.
3. The battery pack according to 2.,
   in which the battery module includes a battery cell having a tab and a voltage detection device that is electrically connected to the tab, and
   the heat-resistant member overlaps at least one of the tab and the voltage detection device.
4. The battery pack according to 2. or 3.,
   in which the battery module includes a gas discharge portion through which the gas is discharged, and
   the gas discharge portion is exposed from the heat-resistant member.
5. The battery pack according to any one of 1. to 4.,
   in which the housing body further accommodates another battery module, and
   the heat-resistant member covers at least a part of the other battery module.
6. The battery pack according to any one of 1. to 5., in which the heat-resistant member covers at least a part of the housing body.

### ADVANTAGEOUS EFFECTS OF INVENTION

According to the above aspect of the present invention, temperature rise of the battery pack due to the gas discharged from the battery module can be suppressed.

### BRIEF DESCRIPTION OF THE DRAWINGS

[FIG. 1] A perspective view of a battery pack according to an embodiment.
[FIG. 2] A plan view of the battery pack according to the embodiment with a harness guide and an upper case removed.
[FIG. 3] A cross-sectional view taken along line A-A of FIG. 2.
[FIG. 4] A cross-sectional view taken along line B-B of FIG. 2.
[FIG. 5] An exploded perspective view of an example of a battery module according to the embodiment.
[FIG. 6] A plan view of a battery pack according to a variant with a harness guide and an upper case removed.
[FIG. 7] A perspective view of a cell upper plate and a first heat-resistant sheet according to the variant.

### DESCRIPTION OF EMBODIMENTS

Hereinafter, embodiments and variants of the present invention will be described with reference to the accompanying drawings. In all drawings, the same constituent elements are denoted by the same reference signs, and detailed description thereof will not be repeated.

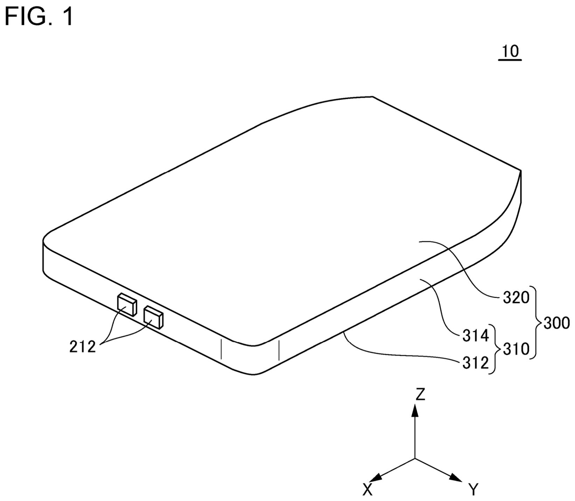

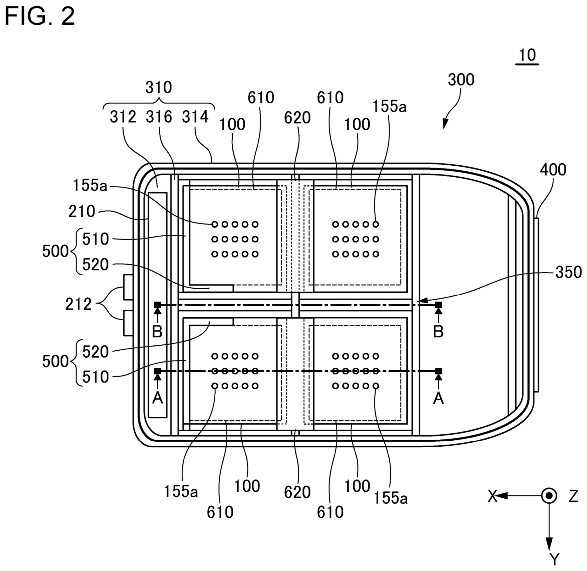

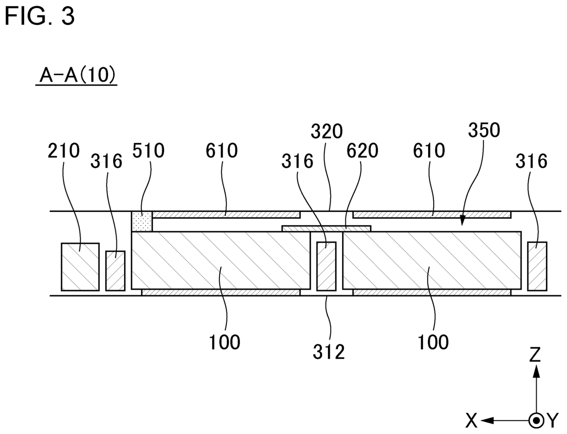

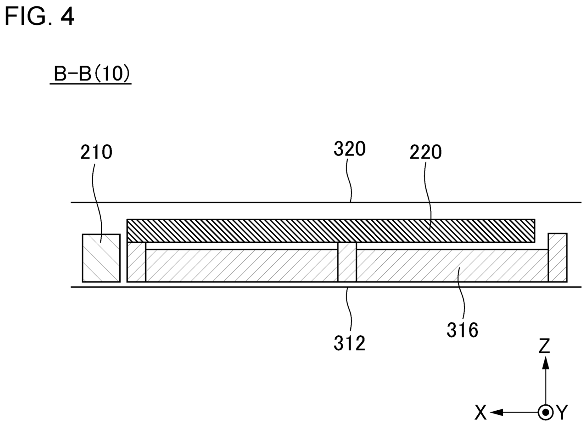

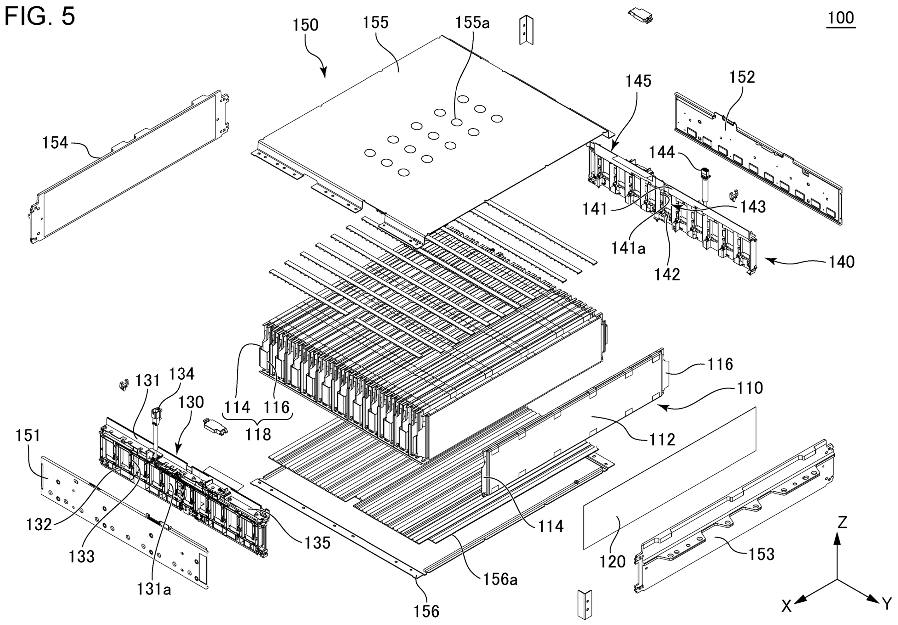

FIG. 1 is a perspective view of a battery pack 10 according to the embodiment. FIG. 2 is a plan view of the battery pack 10 according to the embodiment with a harness guide 220 and an upper case 320 removed. FIG. 3 is a cross-sectional view taken along line A-A of FIG. 2. FIG. 4 is a cross-sectional view taken along line B-B of FIG. 2. FIG. 5 is an exploded perspective view of an example of a battery module 100 according to the embodiment.

In the embodiment, the battery pack 10 is mounted in an automobile. Specifically, the battery pack 10 is mounted between front wheels and rear wheels of the automobile. Hereinafter, the battery pack 10 will be described as being mounted in the automobile unless otherwise specified. However, the battery pack 10 can also be applied to applications other than the automobile.

In each drawing, X, Y, and Z directions are shown for description. The X direction indicates a front-rear direction of the battery pack 10. The Y direction is orthogonal to the X direction. The Y direction indicates a left-right direction of the battery pack 10. The Z direction is orthogonal to both the X direction and the Y direction. The Z direction indicates an up-down direction of the battery pack 10. An arrow indicating the X direction, indicating the Y direction, and an arrow indicating the Z direction indicate a front direction, a left direction, and an up direction of the battery pack 10, respectively. In FIGS. 2 to 4, a white circle with a black dot indicating the Y direction or the Z direction indicates that an arrow indicating the direction indicated by the white circle extends from behind the paper plane to the front. However, the relationship between the X direction, the Y direction, and the Z direction and the front-rear direction, the left-right direction, and the up-down direction of the battery pack 10 is not limited to this example.

In the embodiment, the front-rear direction, the left-right direction, and the up-down direction of the battery pack 10 are determined by the automobile on which the battery pack 10 is mounted. The X direction, the Y direction, and the Z direction indicate a front-rear direction, a left-right direction, and an up-down direction of the automobile, respectively. An arrow indicating the X direction, an arrow indicating the Y direction, and an arrow indicating the Z direction indicate a front direction, a left direction, and an up direction of the automobile, respectively. However, the relationship between the front-rear direction, the left-right direction, and the up-down direction of the battery pack 10 and the front-rear direction, the left-right direction, and the up-down direction of the automobile is not limited to this example.

Hereinafter, a direction perpendicular to the Z direction will be referred to as a horizontal direction, as necessary.

The battery pack 10 will be described with reference to FIGS. 1 to 4.

As shown in FIGS. 2 to 4, the battery pack 10 includes four battery modules 100, a junction box 210, a harness guide 220, a module housing body 300, a gas discharge portion 400, two spacers 500, four upper heat-resistant sheets 610, and two lower heat-resistant sheets 620. The module housing body 300 includes a lower case 310 and an upper case 320. The lower case 310 includes a module lower plate 312, a side frame 314, and a support frame 316. The lower case 310 is generally referred to as, for example, a tray or a body part. The upper case 320 is generally referred to as, for example, a cover or a lid part.

As shown in FIG. 2, from the Z direction, the four battery modules 100 are arranged in two rows and two columns in the X direction and the Y direction. Hereinafter, the battery module 100 positioned on the left front side among the four battery modules 100 will be referred to as the left front battery module 100, the battery module 100 positioned on the right front side among the four battery modules 100 will be referred to as a right front battery module 100, the battery module 100 positioned on the left rear side among the four battery modules 100 will be referred to as the left rear battery module 100, and the battery module 100 positioned on the right rear side among the four battery modules 100 will be referred to as a right rear battery module 100, as necessary. However, the number and the arrangement of the battery modules 100 are not limited to the example shown in FIG. 2.

The battery module 100 will be described with reference to FIG. 5.

Each battery module 100 includes a plurality of battery cells 110, a plurality of compression pads 120, a front voltage detection device 130, a rear voltage detection device 140, and a cell housing body 150.

The plurality of battery cells 110 are stacked in the Y direction. The plurality of compression pads 120 and the plurality of battery cells 110 are alternately stacked in the Y direction. Each compression pad 120 is disposed between the battery cells 110 adjacent to each other in the Y direction and on both sides of the plurality of battery cells 110 in the Y direction. Hereinafter, the plurality of battery cells 110 and the plurality of compression pads 120 alternately stacked in the Y direction will be referred to as a stack of the battery cells 110, as necessary. A longitudinal direction of each battery cell 110 is substantially parallel to the X direction. A lateral direction of each battery cell 110 is substantially parallel to the Z direction. A thickness direction of each battery cell 110 is substantially parallel to the Y direction. The shape of each battery cell 110 is not limited to this example.

Each battery cell 110 includes a battery element (not shown), an exterior material 112, a positive electrode tab 114, and a negative electrode tab 116. In an example, the battery element includes a plurality of positive electrodes and a plurality of negative electrodes (not shown) that are alternately stacked in the Y direction, and a separator (not shown) that is located between the positive electrode and the negative electrode adjacent to each other in the Y direction. The exterior material 112 seals a battery element and an electrolytic solution (not shown). The positive electrode tab 114 is electrically connected to the positive electrode of the battery element. The positive electrode tab 114 is drawn out from one of the both sides of the exterior material 112 in the X direction. The negative electrode tab 116 is electrically connected to the negative electrode of the battery element. The negative electrode tab 116 is drawn out from the other of the both sides of the exterior material 112 in the X direction. However, the structure of each battery cell 110 is not limited to this example.

Each battery cell 110 may be a solid state battery. In the solid state battery, a solid electrolyte layer is provided in a portion corresponding to the separator. The solid state battery does not include the electrolytic solution. Hereinafter, each battery cell 110 will be described as a battery cell including the electrolytic solution unless otherwise specified.

The plurality of battery cells 110 are electrically connected in a combination of series and parallel. Specifically, a cell group including at least two battery cells 110 connected in parallel and adjacent to each other in the Y direction is stacked and connected in series in the Y direction. In front of the stack of the battery cells 110, a tab group 118 including a positive electrode tab 114 drawn out from the battery cell 110 of one cell group connected in parallel and a negative electrode tab 116 drawn out from the battery cell 110 of another cell group connected in parallel is disposed, and the positive electrode tab 114 and the negative electrode tab 116 are electrically connected to each other. The positive electrode tab 114 and the negative electrode tab 116 in the tab group 118 are joined to each other, for example, by laser welding. The tab group 118 is also disposed behind the stack of the battery cells 110. Therefore, the plurality of cell groups are connected in series from the cell group positioned on one end side of the stack of the battery cells 110 in the Y direction to the cell group positioned on the other end side of the stack of the battery cells 110 in the Y direction. Hereinafter, the tab group 118 positioned on the front side of the stack of the battery cells 110 will be referred to as a front tab group 118, and the tab group 118 positioned on the rear side of the stack of the battery cells 110 will be referred to as a rear tab group 118, as necessary.

The electrical connection of the plurality of battery cells 110 is not limited to the above-described example. For example, a single battery cell 110 may be connected in series to form the stack of the battery cells 110. Alternatively, each cell group may include three or more battery cells 110 connected in parallel.

The front voltage detection device 130 detects the voltage of the plurality of front tab groups 118. The front voltage detection device 130 includes a front protector 131, a plurality of front voltage detection terminals 132, a plurality of front voltage detection lines 133, a front connector 134, and a front bus bar 135.

The front protector 131 covers the front portion of the stack of the battery cells 110. The front protector 131 is, for example, an insulator such as a resin. The front protector 131 defines a plurality of front openings 131a. Each of the plurality of front tab groups 118 is exposed forward through each of the plurality of front openings 131a.

Each of the plurality of front voltage detection terminals 132 is positioned in front of each of the plurality of front tab groups 118. Each front voltage detection terminal 132 is, for example, a conductor such as a metal. The rear surface of each front voltage detection terminal 132 and the front surface of each front tab group 118 are joined to each other by a joining method such as laser welding. Therefore, each front voltage detection terminal 132 and each front tab group 118 are electrically connected to each other. Therefore, the front voltage detection device 130 can detect the voltage of each front tab group 118 by each front voltage detection terminal 132. The plurality of front voltage detection terminals 132 are integrally held by the front protector 131. Therefore, by installing the front protector 131 at an appropriate position with respect to the stack of the battery cells 110, each of the plurality of front voltage detection terminals 132 can be disposed at an appropriate position with respect to each of the plurality of front tab groups 118.

One end of each front voltage detection line 133 and each front voltage detection terminal 132 are electrically connected to each other. The other end of each front voltage detection line 133 and the front connector 134 are electrically connected to each other. Therefore, the plurality of front voltage detection terminals 132 and the front connector 134 are electrically connected to each other through the plurality of front voltage detection lines 133. Each front voltage detection line 133 is routed through the front protector 131 between one end of each front voltage detection line 133 and the other end of each front voltage detection line 133.

The front bus bar 135 is disposed at the right end portion of the front protector 131. The front bus bar 135 is electrically connected to the positive electrode tab 114 drawn forward from the battery cell 110 of the cell group positioned at the right end portion of the stack of the battery cells 110. The front bus bar 135 functions as an external terminal for electrically connecting the battery module 100 to another external device such as another battery module.

The rear voltage detection device 140 detects the voltage of the plurality of rear tab groups 118. The rear voltage detection device 140 includes a rear protector 141, a plurality of rear voltage detection terminals 142, a plurality of rear voltage detection lines 143, a rear connector 144, and a rear bus bar 145.

The rear protector 141 covers the rear portion of the stack of the battery cells 110. The rear protector 141 is, for example, an insulator such as a resin. The rear protector 141 defines a plurality of rear openings 141a. Each of the plurality of rear tab groups 118 is exposed rearward through each of the plurality of rear openings 141a.

Each of the plurality of rear voltage detection terminals 142 is positioned behind each of the plurality of rear tab groups 118. Each rear voltage detection terminal 142 is, for example, a conductor such as a metal. The front surface of each rear voltage detection terminal 142 and the rear surface of each rear tab group 118 are joined to each other by a joining method such as laser welding. Therefore, each rear voltage detection terminal 142 and each rear tab group 118 are electrically connected to each other. Therefore, the rear voltage detection device 140 can detect the voltage of each rear tab group 118 by each rear voltage detection terminal 142. The plurality of rear voltage detection terminals 142 are integrally held by the rear protector 141. Therefore, by installing the rear protector 141 at an appropriate position with respect to the stack of the battery cells 110, each of the plurality of rear voltage detection terminals 142 can be disposed at an appropriate position with respect to each of the plurality of rear tab groups 118.

One end of each rear voltage detection line 143 and each rear voltage detection terminal 142 are electrically connected to each other. The other end of each rear voltage detection line 143 and the rear connector 144 are electrically connected to each other. Therefore, the plurality of rear voltage detection terminals 142 and the rear connector 144 are electrically connected to each other through the plurality of rear voltage detection lines 143. Each rear voltage detection line 143 is routed through the rear protector 141 between one end of each rear voltage detection line 143 and the other end of each rear voltage detection line 143.

The rear bus bar 145 is disposed at the left end portion of the rear protector 141. The rear bus bar 145 is electrically connected to the negative electrode tab 116 drawn rearward from the battery cell 110 of the cell group positioned at the left end portion of the stack of the battery cells 110. The rear bus bar 145 functions as an external terminal for electrically connecting the battery module 100 to another external device such as another battery module.

In the example shown in FIG. 5, the positive electrode tab 114 of the terminal of the plurality of cell groups connected in series is drawn out from the battery cell 110 of the cell group positioned on the right end side of the stack of the battery cells 110 to the front, and the negative electrode tab 116 of the terminal of the plurality of cell groups connected in series is drawn out from the battery cell 110 of the cell group positioned on the left end side of the stack of the battery cells 110 to the rear. Therefore, the front bus bar 135 is disposed on the right front side with respect to the stack of the battery cells 110, and the rear bus bar 145 is disposed on the left rear side with respect to the stack of the battery cells 110. However, the disposition of the positive electrode tab 114 and the negative electrode tab 116 of the terminal of the plurality of cell groups connected in series may be different depending on the number of the battery cells 110 included in the stack of the battery cells 110. For example, consider a case where the positive electrode tab 114 of the terminal of the plurality of cell groups connected in series is drawn out from the battery cell 110 of the cell group positioned on the right end side of the stack of the battery cells 110 to the front, and the negative electrode tab 116 of the terminal of the plurality of cell groups connected in series is drawn out from the battery cell 110 of the cell group positioned on the left end side of the stack of the battery cells 110 to the front. **In** this case, the bus bar electrically connected to the positive electrode tab 114 of the terminal of the plurality of cell groups connected in series is disposed on the right front side with respect to the stack of the battery cells 110, and the bus bar electrically connected to the negative electrode tab 116 of the terminal of the plurality of cell groups connected in series is disposed on the left front side with respect to the stack of the battery cells 110.

The cell housing body 150 includes a cell front plate 151, a cell rear plate 152, a cell left plate 153, a cell right plate 154, a cell upper plate 155, and a cell lower plate 156. Each plate is, for example, a metal body such as aluminum.

The cell front plate 151 covers the front portion of the stack of the battery cells 110 and the front voltage detection device 130. The cell rear plate 152 covers the rear portion of the stack of the battery cells 110 and the rear voltage detection device 140. The cell left plate 153 covers the left portion of the stack of the battery cells 110. The cell right plate 154 covers the right portion of the stack of the battery cells 110. The cell upper plate 155 covers the upper portion of the stack of the battery cells 110. A plurality of gas discharge holes 155a are provided in the cell upper plate 155. Therefore, the gas generated from the battery cell 110 can be discharged upward from the battery module 100 through the plurality of gas discharge holes 155a. The plurality of gas discharge holes 155a are disposed in a plurality of rows and a plurality of columns in the X direction and the Y direction. However, the disposition of the plurality of gas discharge holes 155a is not limited to this example. Alternatively, the gas discharge holes 155a need not be provided. The cell lower plate 156 covers the lower portion of the stack of the battery cells 110. A thermally conductive adhesive 156a is disposed between the upper surface of the cell lower plate 156 and the lower surface of the stack of the battery cells 110. Therefore, the heat generated from the stack of the battery cells 110 can be dissipated downward from the battery module 100 through the thermally conductive adhesive 156a.

The battery pack 10 will be described with reference to FIGS. 1 to 4 again. The outer shape of the battery module 100 shown in FIGS. 2 to 4 schematically shows the outer shape of the cell housing body 150 described with reference to FIG. 5. Therefore, the front surface, the rear surface, the left surface, the right surface, the upper surface, and the lower surface of the battery module 100 shown in FIGS. 2 to 4 correspond to the front surface of the cell front plate 151, the rear surface of the cell rear plate 152, the left surface of the cell left plate 153, the right surface of the cell right plate 154, the upper surface of the cell upper plate 155, and the lower surface of the cell lower plate 156 shown in FIG. 5, respectively.

As shown in FIG. 2, the junction box 210 is disposed in front of the four battery modules 100. A pair of junction terminals 212 is provided on the front portion of the junction box 210. As shown in FIG. 1, the front end portion of the junction terminal 212 protrudes forward from the front surface of the side frame 314. The pair of junction terminals 212 and the four battery modules 100 are electrically connected to each other via the junction box 210. Therefore, in the electrical path, the four battery modules 100 are electrically connected in series between the pair of junction terminals 212.

The electronic device disposed in front of the four battery modules 100 is not limited to the junction box 210. At least one electronic device electrically connected to the battery module 100 may be disposed in front of the four battery modules 100 instead of or in addition to the junction box 210. Alternatively, the electronic device disposed in front of the four battery modules 100 may be another battery module different from the four battery modules 100.

As shown in FIG. 4, the harness guide 220 is positioned above the support frame 316 between the battery modules 100 adjacent to each other in the Y direction. The harness guide 220 performs at least one of guiding and holding a harness (not shown). However, the disposition of the harness guide 220 is not limited to the example shown in FIG. 4. In addition, the harness may be routed to a position different from the position where the harness guide 220 is disposed. The harness includes at least one wiring. Examples of the wiring included in the harness include a low-voltage wiring such as a wiring that operates as a signal line and a wiring that constitutes a circuit consisting of a 12 V power supply for a vehicle, a high-voltage wiring such as a voltage detection line electrically connected to at least one of the front connector 134 and the rear connector 144 of the battery module 100 and a signal line of a thermistor that detects the temperature of each battery cell 110 included in the battery module 100, and a high-voltage wiring for supplying power to a heater that heats each battery cell 110 included in the battery module 100.

The module lower plate 312 extends substantially parallel to the horizontal direction. The side frame 314 is substantially perpendicular to the module lower plate 312. From the Z direction, the side frame 314 extends along an outer peripheral edge of the module lower plate 312. From the Z direction, the support frame 316 is a substantially frame body that surrounds each of the four battery modules 100.

The upper case 320 is positioned above the lower case 310 and covers the lower case 310. The lower case 310 and the upper case 320 are attached to each other via a seal material such as rubber between the upper surface of the side frame 314 and a portion of the lower case 310 that faces the upper surface of the side frame 314 in the Z direction. The lower case 310 and the upper case 320 define a housing space that accommodates the four battery modules 100, the junction box 210, and the harness guide 220. Hereinafter, the housing space defined by the lower case 310 and the upper case 320 will be referred to as a housing space of the module housing body 300, as necessary. The housing space of the module housing body 300 is sealed from an outer region of the module housing body 300 with the lower case 310 and the upper case 320 attached to each other via the seal material.

The gas discharge portion 400 is disposed on the rear portion side of the side frame 314. The gas discharge portion 400 includes, for example, a pressure relief device (PRD) such as a pressure relief valve. When the pressure of the housing space of the module housing body 300 exceeds a predetermined value, the gas discharge portion 400 operates, and the gas is discharged from the housing space inside the module housing body 300 via the gas discharge portion 400.

The pressure of the housing space of the module housing body 300 may be increased by the gas discharged from the battery module 100. Specifically, the gas having a relatively high temperature may be generated from the battery cell 110 due to the abnormality of the battery cell 110. The gas generated from the battery cell 110 is discharged upward from the battery module 100 via the plurality of gas discharge holes 155a. As shown in FIG. 3, a communication space 350 is present in the housing space of the module housing body 300. The communication space 350 is a space that communicates with the four battery modules 100 and the gas discharge portion 400 above the upper surfaces of the four battery modules 100. The gas discharged from each battery module 100 reaches the gas discharge portion 400 via the communication space 350.

The gas generated from the battery cell 110 may be discharged from a gas discharge portion different from the plurality of gas discharge holes 155a. For example, the gas generated from the battery cell 110 may be discharged from a gap between the cell front plate 151 and the cell upper plate 155, a gap between the cell rear plate 152 and the cell upper plate 155, a gap between the cell left plate 153 and the cell upper plate 155, or a gap between the cell right plate 154 and the cell upper plate 155. The gas discharged from these gaps is also discharged upward from the battery module 100 and reaches the gas discharge portion 400 via the communication space 350.

As shown in FIG. 2, from the Z direction, the two spacers 500 are arranged in the Y direction and are disposed substantially symmetrically. One of the spacers 500 is disposed on the upper surface side of the left front battery module 100. Hereinafter, the spacer 500 disposed on the upper surface side of the left front battery module 100 will be referred to as the left spacer 500, as necessary. As shown in FIG. 3, the left spacer 500 is disposed in a gap between the upper surface of the left front battery module 100 and the lower surface of the upper case 320. The other spacer 500 is disposed on the upper surface side of the right front battery module 100. Hereinafter, the spacer 500 disposed on the upper surface side of the right front battery module 100 will be referred to as the right spacer 500, as necessary. The right spacer 500 is disposed in a gap between the upper surface of the right front battery module 100 and the lower surface of the upper case 320.

The left spacer 500 will be described. Hereinafter, unless otherwise specified, the description of the left spacer 500 is also applicable to the right spacer 500, except that the left spacer 500 and the right spacer 500 are disposed substantially symmetrically as viewed in the Z direction.

As shown in FIG. 2, the left spacer 500 has a substantially L-shape as viewed in the Z direction. The left spacer 500 includes a first spacer extending body 510 and a second spacer extending body 520. Hereinafter, the first spacer extending body 510 of the left spacer 500 and the second spacer extending body 520 of the left spacer 500 will be referred to as the left first spacer extending body 510 and the left second spacer extending body 520, respectively, as necessary.

As shown in FIG. 2, the left first spacer extending body 510 extends in the Y direction along the front outer edge of the upper surface of the left front battery module 100 as viewed in the Z direction. A length of the left first spacer extending body 510 in the Y direction is substantially equal to a length of the upper surface of the left front battery module 100 in the Y direction. As viewed in the Z direction, the left second spacer extending body 520 extends in the X direction along the right outer edge of the upper surface of the left front battery module 100. A length of the left second spacer extending body 520 in the X direction is shorter than a length of the upper surface of the left front battery module 100 in the X direction. However, the shape of the left first spacer extending body 510 is not limited to the shape shown in FIG. 2.

As shown in FIG. 2, the left first spacer extending body 510 is positioned in front of the plurality of gas discharge holes 155a of the left front battery module 100 as viewed in the Z direction. Therefore, when the gas is discharged from the left front battery module 100, the left first spacer extending body 510 functions as a gas shielding portion that shields the gas flowing in a direction opposite to a direction from the left front battery module 100 toward the gas discharge portion 400. Therefore, the gas discharged from the left front battery module 100 can be efficiently moved toward the gas discharge portion 400, and the gas discharged from the left front battery module 100 can be efficiently discharged from the gas discharge portion 400 compared to when the left first spacer extending body 510 is not provided.

The left first spacer extending body 510 can shield not only the gas discharged from the left front battery module 100 but also the gas discharged from the left rear battery module 100. That is, when the gas is discharged from the left rear battery module 100, the left first spacer extending body 510 can function as a gas shielding portion that shields the gas flowing in a direction opposite to a direction from the left rear battery module 100 toward the gas discharge portion 400. Therefore, the gas discharged from the left rear battery module 100 can be efficiently moved toward the gas discharge portion 400, and the gas discharged from the left rear battery module 100 can be efficiently discharged from the gas discharge portion 400 compared to when the left first spacer extending body 510 is not provided.

As shown in FIG. 2, the left first spacer extending body 510 is positioned between the plurality of gas discharge holes 155a of the left front battery module 100 and the left portion of the junction box 210 as viewed in the Z direction.

Therefore, the left left first spacer extending body 510 functions as a gas shielding portion that shields the gas flowing from the left front battery module 100 or the left rear battery module 100 toward the junction box 210. Therefore, the junction box 210 can be protected from the gas generated from the left front battery module 100 or the left rear by the left first spacer extending body 510.

As shown in FIG. 2, the left second spacer extending body 520 is positioned on the right side with respect to a part of the gas discharge holes 155a on the front side of the left front battery module 100 as viewed in the Z direction. Therefore, the left second spacer extending body 520 functions as a gas shielding portion that shields the gas flowing from the left front battery module 100 toward the gas discharge portion 400 to the right side. Therefore, the gas discharged from the left front battery module 100 can be efficiently moved toward the gas discharge portion 400, and the gas discharged from the left front battery module 100 can be efficiently discharged from the gas discharge portion 400 compared to when the left second spacer extending body 520 is not provided.

As shown in FIG. 2, the left second spacer extending body 520 is positioned between the part of the gas discharge holes 155a on the front side of the left front battery module 100 and the front portion of the right front battery module 100 as viewed in the Z direction. Therefore, the left second spacer extending body 520 functions as a gas shielding portion that shields the gas flowing from the left front battery module 100 toward the right front battery module 100. Therefore, the right front battery module 100 can be protected from the gas generated from the left front battery module 100 by the left second spacer extending body 520.

The left spacer 500 is, for example, an elastic body having heat resistance and flame retardancy, such as foamed silicone. However, the material used for the spacer 500 is not limited to the foamed silicone as long as the material has desired heat resistance, flame retardancy, and rebound elastic modulus. The left spacer 500 is compressed in the Z direction by the upper surface of the left front battery module 100 and the lower surface of the upper case 320. As a result, the left spacer 500 is elastically deformed. Therefore, the likelihood of a gap occurring between the lower surface of the left spacer 500 and the upper surface of the left front battery module 100 and between the upper surface of the left spacer 500 and the lower surface of the upper case 320 can be reduced compared to when the left spacer 500 is not elastically deformed. Accordingly, the gas can be easily shield by the left spacer 500 compared to when the gap is present. The material of the left spacer 500 is not limited to the elastic body. For example, the left spacer 500 may be a rigid body that is not elastically deformed by the compression of the upper surface of the left front battery module 100 and the lower surface of the upper case 320.

A fixing method of the left spacer 500 is not particularly limited. For example, the lower surface of the left spacer 500 and the upper surface of the battery module 100 may be joined to each other by a bonding material such as an adhesive in advance. Alternatively, the upper surface of the left spacer 500 and the lower surface of the upper case 320 may be joined to each other by a bonding material such as an adhesive in advance. Alternatively, the lower surface and the upper surface of the left spacer 500 may not be joined to the upper surface of the battery module 100 and the lower surface of the upper case 320 in advance, respectively.

As described above, the spacer 500 functions as a gas shielding portion that shields the gas flowing in a direction different from the direction from the battery module 100 toward the gas discharge portion 400. Therefore, when the spacer 500 is provided, the gas discharged from the battery module 100 can be efficiently discharged from the gas discharge portion 400 compared to when the spacer 500 is not provided.

For each upper heat-resistant sheet 610, for example, a commercially available heat-resistant sheet can be used. For the heat-resistant sheet, for example, a fiber sheet in which fibers including carbon, silica, alumina, magnesia, or the like are sheeted together with a silicone resin or a fluorine-based resin, a ceramic plate, or the like can be used, but the present invention is not limited thereto. From the viewpoint of formability and heat resistance, the fiber sheet in which the heat resistance temperature of the fiber is 1000°C or higher is particularly preferable. As shown in FIG. 2, the four upper heat-resistant sheets 610 and the four battery modules 100 overlap each other in the Z direction. Hereinafter, the upper heat-resistant sheet 610 positioned on the left front side among the four upper heat-resistant sheets 610 will be referred to as the left front upper heat-resistant sheet 610, the upper heat-resistant sheet 610 positioned on the right front side among the four upper heat-resistant sheets 610 will be referred to as the right front upper heat-resistant sheet 610, the upper heat-resistant sheet 610 positioned on the left rear side among the four upper heat-resistant sheets 610 will be referred to as the left rear upper heat-resistant sheet 610, and the upper heat-resistant sheet 610 positioned on the right rear side among the four upper heat-resistant sheets 610 will be referred to as the right rear upper heat-resistant sheet 610, as necessary.

As shown in FIG. 3, the left front upper heat-resistant sheet 610 covers the lower surface of a portion of the upper case 320 overlapping the left front battery module 100 in the Z direction. The same applies to the left rear upper heat-resistant sheet 610, the right front upper heat-resistant sheet 610, and the right rear upper heat-resistant sheet 610. As a result, each upper heat-resistant sheet 610 is a heat-resistant member disposed on the lower surface of the upper case 320 around the communication space 350. Therefore, the temperature rise of the upper case 320 due to the high-temperature gas passing through the communication space 350 can be suppressed compared to when these upper heat-resistant sheets 610 are not provided. For example, a material such as a rust preventive coating may be coated on the lower surface of the upper case 320. When the material is exposed to the high-temperature gas and melts and drips down, the melted material may come into contact with any portion of the battery module 100. However, when the upper heat-resistant sheet 610 is provided, the possibility that the above-described material melts and drips down due to the high-temperature gas can be reduced compared to when the upper heat-resistant sheet 610 is not provided.

A mounting method of the upper surface of the left front upper heat-resistant sheet 610 and the lower surface of the upper case 320 is not particularly limited. The upper surface of the left front upper heat-resistant sheet 610 and the lower surface of the upper case 320 may be bonded to each other, for example, via an adhesive layer provided on the upper surface side of the left front upper heat-resistant sheet 610.

For each lower heat-resistant sheet 620, for example, a commercially available heat-resistant sheet can be used. For the heat-resistant sheet, for example, a fiber sheet in which fibers including carbon, silica, alumina, magnesia, or the like are sheeted together with a silicone resin or a fluorine-based resin, a ceramic plate, or the like can be used, but the present invention is not limited thereto. From the viewpoint of formability and heat resistance, the fiber sheet in which the heat resistance temperature of the fiber is 1000°C or higher is particularly preferable. As shown in FIG. 2, the two lower heat-resistant sheets 620 are arranged in the Y direction and are disposed substantially symmetrically as viewed in the Z direction. Hereinafter, the lower heat-resistant sheet 620 positioned on the left side among the two lower heat-resistant sheets 620 will be referred to as the left lower heat-resistant sheet 620, and the lower heat-resistant sheet 620 positioned on the right side among the two lower heat-resistant sheets 620 will be referred to as the right lower heat-resistant sheet 620, as necessary.

The left lower heat-resistant sheet 620 will be described. Hereinafter, unless otherwise specified, the description of the left lower heat-resistant sheet 620 is also applicable to the right lower heat-resistant sheet 620, except that the left lower heat-resistant sheet 620 and the right lower heat-resistant sheet 620 are disposed substantially symmetrically as viewed in the Z direction.

As shown in FIGS. 2 and 3, the left lower heat-resistant sheet 620 covers the upper surface of the rear portion of the left front battery module 100 and the upper surface of the front portion of the left rear battery module 100. As a result, the left lower heat-resistant sheet 620 is a heat-resistant member disposed on the upper surface of the rear portion of the left front battery module 100 and the upper surface of the front portion of the left rear battery module 100 around the communication space 350. Therefore, the temperature rise of the rear portion of the left front battery module 100 and the front portion of the left rear battery module 100 due to the high-temperature gas passing through the communication space 350 can be suppressed compared to when the left lower heat-resistant sheet 620 is not provided.

As shown in FIG. 3, the left lower heat-resistant sheet 620 exposes the plurality of gas discharge holes 155a of the left front battery module 100 and the plurality of gas discharge holes 155a of the left rear battery module 100. Therefore, the gas can be efficiently discharged from these gas discharge holes 155a compared to when these gas discharge holes 155a are covered by the left lower heat-resistant sheet 620.

The front portion of the left lower heat-resistant sheet 620 overlaps at least one of the tab group 118 on the rear side of the left front battery module 100 shown in FIG. 5 and the rear voltage detection device 140 in the Z direction. Therefore, the tab group 118 and the rear voltage detection device 140 can be protected from the high-temperature gas passing through the communication space 350 above the rear portion of the left front battery module 100 by the left lower heat-resistant sheet 620.

The rear portion of the left lower heat-resistant sheet 620 overlaps at least one of the tab group 118 on the rear side of the left rear battery module 100 shown in FIG. 5 and the front voltage detection device 130 in the Z direction. Therefore, the tab group 118 and the front voltage detection device 130 can be protected from the high-temperature gas passing through the communication space 350 above the front portion of the left rear battery module 100 by the left lower heat-resistant sheet 620.

As shown in FIGS. 2 and 3, the left lower heat-resistant sheet 620 extends from the rear portion of the left front battery module 100 to the front portion of the left rear battery module 100. As a result, the upper surface of the rear portion of the left front battery module 100 and the upper surface of the front portion of the left rear battery module 100 can be covered by one lower heat-resistant sheet 620. Therefore, the number of components of the battery pack 10 can be reduced compared to when the upper surface of the rear portion of the left front battery module 100 and the upper surface of the front portion of the left rear battery module 100 are covered by separate lower heat-resistant sheets 620.

A mounting method of the lower surface of the front portion of the left lower heat-resistant sheet 620 and the upper surface of the rear portion of the left front battery module 100 is not particularly limited. The lower surface of the front portion of the left lower heat-resistant sheet 620 and the upper surface of the rear portion of the left front battery module 100 may be bonded to each other, for example, via an adhesive layer provided on the lower surface side of the left lower heat-resistant sheet 620. The same applies to the lower surface of the rear portion of the left lower heat-resistant sheet 620 and the upper surface of the front portion of the left rear battery module 100.

The disposition of the upper heat-resistant sheet 610 and the lower heat-resistant sheet 620 is not limited to the example shown in FIGS. 2 and 3. The heat-resistant members such as the upper heat-resistant sheet 610 and the lower heat-resistant sheet 620 can be at least partially disposed around the communication space 350. When the heat-resistant member is provided, the temperature rise around the communication space 350 due to the high-temperature gas passing through the communication space 350 can be suppressed compared to when the heat-resistant member is not provided.

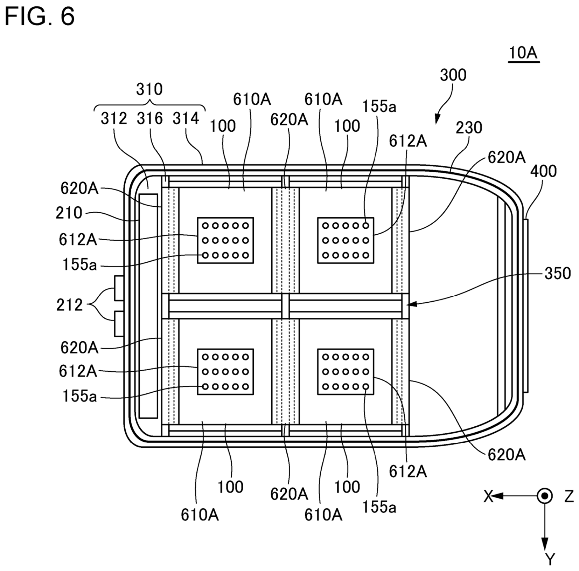

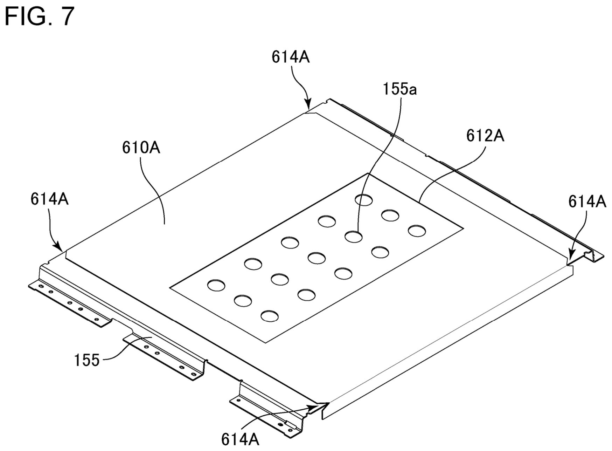

FIG. 6 is a plan view of a battery pack 10A according to a variant with a harness guide and an upper case removed. FIG. 7 is a perspective view of a cell upper plate 155 and a first heat-resistant sheet 610A according to the variant. The battery pack 10A according to the variant is the same as the battery pack 10 according to the embodiment, except for the following points.

In FIG. 6, the spacers corresponding to the two spacers 500 according to the embodiment are removed. The battery pack 10A according to the variant may also include the spacer corresponding to the two spacers 500 according to the embodiment, in the same manner as the battery pack 10 according to the embodiment.

As shown in FIG. 6, the battery pack 10A according to the variant includes four first heat-resistant sheets 610A and six second heat-resistant sheets 620A. The four first heat-resistant sheets 610A and the four battery modules 100 overlap each other in the Z direction. Each first heat-resistant sheet 610A covers the upper surface of a peripheral portion of the plurality of gas discharge holes 155a of each battery module 100. The six second heat-resistant sheets 620A include two second heat-resistant sheets 620A on the front side in the X direction, two second heat-resistant sheets 620A on the central side in the X direction, and two second heat-resistant sheets 620A on the rear side in the X direction. One of the two second heat-resistant sheets 620A on the front side in the X direction covers the front portion of the left front battery module 100. The other of the two second heat-resistant sheets 620A on the front side in the X direction covers the front portion of the right front battery module 100. One of the two second heat-resistant sheets 620A on the central side in the X direction covers the rear portion of the left front battery module 100 and the front portion of the left rear battery module 100. The other of the two second heat-resistant sheets 620A on the central side in the X direction covers the rear portion of the right front battery module 100 and the front portion of the right rear battery module 100. One of the two second heat-resistant sheets 620A on the rear side in the X direction covers the rear portion of the left rear battery module 100. The other of the two second heat-resistant sheets 620A on the rear side in the X direction covers the rear portion of the right rear battery module 100.

Hereinafter, the second heat-resistant sheet 620A positioned on the left front side among the six second heat-resistant sheets 620A will be referred to as the left front second heat-resistant sheet 620A, the second heat-resistant sheet 620A positioned on the right front side among the six second heat-resistant sheets 620A will be referred to as the right front second heat-resistant sheet 620A, the second heat-resistant sheet 620A positioned on the left central side among the six second heat-resistant sheets 620A will be referred to as the left central second heat-resistant sheet 620A, the second heat-resistant sheet 620A positioned on the right central side among the six second heat-resistant sheets 620A will be referred to as the right central second heat-resistant sheet 620A, the second heat-resistant sheet 620A positioned on the left rear side among the six second heat-resistant sheets 620A will be referred to as the left rear second heat-resistant sheet 620A, and the second heat-resistant sheet 620A positioned on the right rear side among the six second heat-resistant sheets 620A will be referred to as the right rear second heat-resistant sheet 620A, as necessary.

The first heat-resistant sheet 610A according to the variant will be described with reference to FIG. 7.

The first heat-resistant sheet 610A defines a center opening 612A. The plurality of gas discharge holes 155a are exposed from the center opening 612A. Therefore, the gas can be efficiently discharged from the plurality of gas discharge holes 155a compared to when the first heat-resistant sheet 610A covers the plurality of gas discharge holes 155a.

The left end portion and the right end portion of the first heat-resistant sheet 610A are bent downward at substantially right angles with respect to the left edge and the right edge of the cell upper plate 155, respectively. Therefore, the left edge and the right edge of the cell upper plate 155 can be covered by the left end portion and the right end portion of the first heat-resistant sheet 610A. A pair of notches 614A are provided at bent portions of the first heat-resistant sheet 610A at the left edge and the right edge of the cell upper plate 155 on the front edge. Similarly, a pair of notches 614A are provided at bent portions of the first heat-resistant sheet 610A at the left edge and the right edge of the cell upper plate 155 on the rear edge. Therefore, the left end portion and the right end portion of the first heat-resistant sheet 610A can be easily bent compared to when these notches 614A are not provided.

The front portion and the rear portion of the upper surface of the cell upper plate 155 are exposed from the first heat-resistant sheet 610A. The portions of the front portion and the rear portion of the upper surface of the cell upper plate 155, which are exposed from the first heat-resistant sheet 610A, can be used as a margin for attaching the second heat-resistant sheet 620A.

The first heat-resistant sheet 610A and the second heat-resistant sheet 620A according to the variant will be described with reference to FIG. 6.

Each first heat-resistant sheet 610A is a heat-resistant member disposed on the upper surface of the peripheral portion of the plurality of gas discharge holes 155a of each battery module 100 around the communication space 350. Therefore, the temperature rise of the peripheral portion of the plurality of gas discharge holes 155a of each battery module 100 due to the high-temperature gas passing through the communication space 350 can be suppressed compared to when each first heat-resistant sheet 610A is not provided.

The left central second heat-resistant sheet 620A is a heat-resistant member disposed on the upper surface of the rear portion of the left front battery module 100 and the upper surface of the front portion of the left rear battery module 100 around the communication space 350. Therefore, the temperature rise of the rear portion of the left front battery module 100 and the front portion of the left rear battery module 100 due to the high-temperature gas passing through the communication space 350 can be suppressed compared to when the left central second heat-resistant sheet 620A is not provided.

The front portion of the left central second heat-resistant sheet 620A overlaps at least one of the tab group 118 on the rear side of the left front battery module 100 shown in FIG. 5 and the rear voltage detection device 140 in the Z direction. Therefore, the tab group 118 and the rear voltage detection device 140 can be protected from the high-temperature gas passing through the communication space 350 above the rear portion of the left front battery module 100 by the left central second heat-resistant sheet 620A.

The rear portion of the left central second heat-resistant sheet 620A overlaps at least one of the tab group 118 on the front side of the left rear battery module 100 shown in FIG. 5 and the front voltage detection device 130 in the Z direction. Therefore, the tab group 118 and the front voltage detection device 130 can be protected from the high-temperature gas passing through the communication space 350 above the front portion of the left rear battery module 100 by the left central second heat-resistant sheet 620A.

The description of the left central second heat-resistant sheet 620A is also similarly applicable to the right central second heat-resistant sheet 620A.

The left front second heat-resistant sheet 620A is a heat-resistant member disposed on the upper surface of the front portion of the left front battery module 100 around the communication space 350. Therefore, the temperature rise of the front portion of the left front battery module 100 due to the high-temperature gas passing through the communication space 350 can be suppressed compared to when the left front second heat-resistant sheet 620A is not provided.

The left front second heat-resistant sheet 620A overlaps at least one of the tab group 118 on the front side of the left front battery module 100 shown in FIG. 5 and the front voltage detection device 130 in the Z direction. Therefore, the tab group 118 and the front voltage detection device 130 can be protected from the high-temperature gas passing through the communication space 350 above the front portion of the left front battery module 100 by the left front second heat-resistant sheet 620A.

The description of the left front second heat-resistant sheet 620A is also similarly applicable to the right front second heat-resistant sheet 620A.

The left rear second heat-resistant sheet 620A is a heat-resistant member disposed on the upper surface of the rear portion of the left rear battery module 100 around the communication space 350. Therefore, the temperature rise of the rear portion of the left rear battery module 100 due to the high-temperature gas passing through the communication space 350 can be suppressed compared to when the left rear second heat-resistant sheet 620A is not provided.

The left rear second heat-resistant sheet 620A overlaps at least one of the tab group 118 on the rear side of the left rear battery module 100 shown in FIG. 5 and the rear voltage detection device 140 in the Z direction. Therefore, the tab group 118 and the rear voltage detection device 140 can be protected from the high-temperature gas passing through the communication space 350 above the rear portion of the left rear battery module 100 by the left rear second heat-resistant sheet 620A.

The description of the left rear second heat-resistant sheet 620A is also similarly applicable to the right rear second heat-resistant sheet 620A.

As described above, in the embodiment, the gas discharged from the battery module 100 can be efficiently discharged by the spacer 500.

Although the embodiments and variants of the present invention have been described above with reference to the accompanying drawings, these are merely examples of the present invention, and various other configurations may be employed.

This application claims priority based on Japanese Patent Application No. 2023-094020 filed on June 07, 2023, and the disclosure of which is incorporated herein in its entirety by reference.

### REFERENCE SIGNS LIST

10, 10A battery pack, 100 battery module, 110 battery cell, 112 exterior material, 114 positive electrode tab, 116 negative electrode tab, 118 tab group, 120 compression pad, 130 front voltage detection device, 131 front protector, 131a front opening, 132 front voltage detection terminal, 133 front voltage detection line, 134 front connector, 135 front bus bar, 140 rear voltage detection device, 141 rear protector, 141a rear opening, 142 rear voltage detection terminal, 143 rear voltage detection line, 144 rear connector, 145 rear bus bar, 150 cell housing body, 151 cell front plate, 152 cell rear plate, 153 cell left plate, 154 cell right plate, 155 cell upper plate, 155a gas discharge hole, 156 cell lower plate, 156a thermally conductive adhesive, 210 junction box, 212 junction terminal, 220 harness guide, 300 module housing body, 310 lower case, 312 module lower plate, 314 side frame, 316 support frame, 320 upper case, 350 communication space, 400 gas discharge portion, 500 spacer, 510 first spacer extending body, 520 second spacer extending body, 610 upper heat-resistant sheet, 610A first heat-resistant sheet, 612A center opening, 614A notch, 620 lower heat-resistant sheet, 620A second heat-resistant sheet,

## Claims

1. A battery pack comprising:
a battery module;
a housing body that accommodates the battery module;
a gas discharge portion to discharge gas discharged from the battery module out of the housing body; and
a heat-resistant member that is at least partially disposed around a space that communicates with the battery module and the gas discharge portion inside the housing body.

2. The battery pack according to Claim 1,
wherein the heat-resistant member covers at least a part of the battery module.

3. The battery pack according to Claim 2,
wherein the battery module includes a battery cell having a tab and a voltage detection device that is electrically connected to the tab, and
the heat-resistant member overlaps at least one of the tab and the voltage detection device.

4. The battery pack according to Claim 2,
wherein the battery module includes a gas discharge portion through which the gas is discharged, and
the gas discharge portion is exposed from the heat-resistant member.

5. The battery pack according to any one of Claims 1 to 4,
wherein the housing body further accommodates another battery module, and
the heat-resistant member covers at least a part of the other battery module.

6. The battery pack according to any one of Claims 1 to 4,
wherein the heat-resistant member covers at least a part of the housing body.
